# EUROPEAN PATENT SPECIFICATION

(11) **EP 3 057 403 B1**
(45) Date of publication and mention of the grant of the patent: **11.10.2017**
(21) Application number: 14787027.3
(22) Date of filing: 14.10.2014
(51) Int. Cl.: A01C 7/08, A01C 7/10

(54) **METERING SYSTEM**
DOSIERUNGSSYSTEM
SYSTÈME DE DOSAGE

(30) Priority: 15.10.2013 GB 201318240
(43) Date of publication of application: 24.08.2016
(73) Proprietor: Sumo UK Limited, York, Yorkshire YO42 4RG (GB)
(72) Inventor: WEALLEANS, Shaun, York Yorkshire YO42 4RG (GB); HIGHT, Robert, York Yorkshire YO42 4RG (GB); CUSHING, Daniel, York Yorkshire YO42 4RG (GB)
(74) Representative: Wilson, Peter
(86) International application number: PCT/GB2014/053081
(87) International publication number: WO 2015/055996

(56) References cited:
- DE-A1- 2 214 106
- US-A- 6 112 679
- US-A1- 2012 216 419

## Description

The invention relates to a metering system, for example for use in an agricultural distribution machine such as an agricultural seed drill, for conveying seed, beans or like particulate materials at varying rates. The invention also relates to an agricultural distribution machine such as a seed drilling apparatus incorporating such a metering system.

In a variety of agricultural applications it is desirable to deliver material in particulate form onto or into a growing surface, in particular for example to distribute seed or beans into a growing substrate or to apply particulate treatment such as granular fertiliser to a growing surface. The invention relates generally to a metering system for the metering of granular material in particular from a source hopper to a pneumatic distribution system, for example for use in an agricultural distribution machine such as an agricultural seed drill. The invention is discussed and examples are offered in that context of a pneumatic seeder for an agricultural seed drill but the skilled person will appreciate the more general applicability of the concept for example to other agricultural distribution machines and non-agricultural applications.

In a typical prior art apparatus pneumatic seeders (or air seeders) introduce seeds or beans into an airflow to transport them to seed outlets for sowing. Similar arrangements might be used for distributing other particulate materials such as granular fertiliser. The seed or other particulate material is usually stored in a hopper and metered into an airflow at varying rates depending on rate needed.

Traditionally the metering is done via a roller with shaped recesses allowing material to be moved from the hopper into the airflow for sowing. This process can be done at varying speeds depending on motor and/or by changing to a different, specification roller with varying sized recesses. Rollers generally have to be changed to cater for different shapes and sizes of granular material. Rollers can be time consuming to change, expensive to manufacture, and can have an inconsistent performance for example when metered material contains even small amounts moisture. Metering uniformity may be impaired due to sudden release of batches of granular material.

Alternative arrangements are known in which the metering is performed under the action of an auger comprising helical or similar flights mounted for rotation on a central rotatable shaft. Examples of such arrangements are described for instance in US Patent No US4700895 and US Patent Publication US2004/0069193.

DE2214106 describes a machine for spreading seeds or fertilizers that makes use of a metering device comprising a continuous auger. US2012/0216419 describes a system for removing soil from seed that comprises an auger portion.

What these arrangements have in common is that the auger flights are mounted on and in rigid integral mechanical arrangement with the rotatable central shaft so that the shaft and flights rotate together and so that rotation of the shaft causes rotation of the flights and effects a metering action on the seed or other particulate.

There is a general desire for an improved metering system that meters particulate material at varying rates from a storage source such as a hopper to a transport and distribution system including a pneumatic transport system, for example being part of a transport and distribution system in an agricultural distribution machine such as an agricultural seed drill.

In accordance with the invention in a first most general aspect a metering system that meters particulate material at varying rates from a storage source such as a hopper to a transport and distribution system including a pneumatic transport system is provided in accordance with the claims appended hereto.

The invention is thus intended to provide a single metering mechanism by means of which particulate material such as seed may be metered at varying rates from a storage source to a pneumatic transport system. The invention is characterised in the distinctive metering system of claim 1, which is intended to be applicable otherwise across a conventional range of storage sources such as grain hoppers and the like and across a conventional range of transport and distribution systems in particular including conventional pneumatic seed and bean transport systems.

The invention uses a single metering system comprising a screw conveyor received within a metering channel to convey particulate material from an inlet in communication with a source such as a hopper to an outlet in communication with a pneumatic transport system, instead of a range of interchangeable rollers. The rate of metering is inherently controllable by varying the speed of the screw conveyor, and further advantageously can be fine-tuned via a number of the preferred advantageous features further discussed below.

The screw conveyor comprises as will be familiar a rotating progressive and for example helical screw flighting which is received within the metering channel such as, as it rotates, to tend to urge particulate material in a metering direction along the metering channel from an inlet to an outlet.

The invention proposes the use of a centreless conveyor. That is, the flighting progresses surroundingly about and for example spirals around a nominal but open central axis of the screw conveyor to define an axially extending central aperture. The screw conveyor is for example a centreless Auger. According to the invention a centreless screw conveyor such as a centreless Auger conveyor is additionally provided in conjunction with a static central shaft. The static central shaft is conveniently configured to extend in use at least partly along the length of the axially extending central aperture defined by the centreless screw conveyor and more specifically surroundingly defined by the centreless progressive flighting of the centreless screw conveyor.

The invention uses a centreless screw conveyor in conjunction with a static central shaft received within an axially extending central aperture defined within the centre of the conveyor for at least a part of the axially extending length thereof, and in a possible embodiment for a major part and for example substantially all the length thereof when in use in situ in the central aperture. Plural differently sized static central shafts may be provided extending for a different extent along the length of an axially extending central aperture defined by the screw conveyor when in situ in use. These may for example be interchangeable. In the typical case, the static central shaft comprises a cylindrical rod and the axially extending central aperture defined by the centreless screw conveyor and more specifically surroundingly defined by the centreless progressive flighting of the centreless screw conveyor has a complementary circular cross-section. The static central shaft is preferably located concentrically within and for example coaxially with the axially extending central aperture.

The consequent arrangement is still significantly mechanically distinct from prior art arrangements in which a centred screw conveyor has a mechanically connected and rotating central shaft which is mechanically engaged with and rotates with (and typically drives) the flights. By contrast, the static central shaft of the present invention is merely received in and sits within the central aperture surroundingly defined by the flights, but the flights rotate freely around it.

Indeed, in a generally preferred embodiment, some clearance is provided between the static central shaft and the central aperture surroundingly defined by the flights. That is to say, the flights surroundingly define a central aperture having a first cross-sectional extent, and in the normal case define a circular central aperture having a first diameter, and the static central shaft has a complementary cross sectional shape of substantially lesser cross-sectional extent, and is for example a circular rod of substantially lesser diameter. Plural differently sized static central shafts may be provided of differing cross-sectional extent providing different clearances when in situ in use within the axially extending central aperture defined by the screw conveyor. These may for example be interchangeable.

Similarly, the screw conveyor may be sized so as to be received in the metering channel in such manner that some clearance is provided between outer perimeter of the screw conveyor defined by the flights and a surrounding wall of the metering channel.

By way of illustration, in relation to the intended application of the invention in a pneumatic seed drill, a typical centreless screw conveyor might be provided with a central aperture of diameter 30 mm - 100 mm, and the central shaft may be so configured as to give a clearance, when coaxially located within the aperture, of between 2 mm and 10 mm, and consequently have a diameter of between 4 mm and 20 mm less than the diameter of the central aperture. A typical centreless screw conveyor might be provided with an outer perimeter of diameter 50 mm - 120 mm and a similar clearance may be provided between the outer perimeter and a surrounding wall of the metering channel.

The static central shaft may provide a number of functions. For example, it may ensure consistent positive metering of small particulate material, reducing backflow down the open centre. Additionally, the central shaft may provide a self-cleaning mechanism so that if the material contains moisture for example, reliable and consistent performance is improved.

An inherent effect of the central shaft when coaxially located in position within the aperture defined by the centreless flighting of the centreless screw conveyor is to occlude, partly or entirely depending upon its diameter and whether it fits snugly therein, at least a part of the length of the central aperture. This can have a controlling effect in relation to flow rate. For example, alternative static central shafts may be considered which extend only a minor part of the distance along the axially extending central aperture, which extend a major part of the distance along the axially extending central aperture, and which extend substantially the entire distance along the axially extending central aperture. By appropriate selection of the relative length of the static central shaft and/ or by appropriate selection of the clearance between its outer surface and the inner surface of the central aperture defined by the centreless flighting of the screw conveyor the design of the preferred embodiment of the invention can be optimised for a range of particulate material distribution scenarios and operating conditions, and in the particular case of the preferred embodiment can be optimised for use of the metering system of the invention as a metering system in a pneumatic seed drill. Plural interchangeable shafts may be provided as a means to vary flow rate/ optimise the system for different conditions and applications.

It is a fundamental feature of the static central shaft of the preferred embodiment of the invention that it is not mechanically engaged with and does not rotate with the flighting of the screw conveyor. Nevertheless, it is desirable in use that the screw conveyor flighting and the central shaft are mounted in a fixed spatial relationship relative to each other, and in particular in the preferred case are mounted coaxially. Accordingly, in a possible embodiment, the central shaft is fixedly mountable and is mounted in situ in use within the metering system so as to be in fixed spatial relationship relative to the centreless screw conveyor, and in particular so as to sit in a fixed position within the central aperture defined by the screw conveyor. Most preferably, this fixed position is coaxial with the nominal but open central axis defined by the progressive screw flighting. The central shaft may be adapted for releasable mounting.

Conveniently, this fixed spatial relationship may be achieved in that the static central shaft is mountable and is mounted in situ in use in rigid mechanical engagement with a housing defining the metering channel and thus, with the screw conveyor also received in the said metering channel when the invention is assembled for use, in fixed relative spatial relationship is maintained between the channel, the screw flights, and the central shaft. The central shaft may be adapted for releasable mounting engagement, for example within the channel and for example upon a housing defining the channel by releasable engagement means, for example to allow different lengths/ diameters of shaft to be used interchangeably. Suitable engagement means include bolts and the like.

This arrangement of centreless Auger or like conveyor and static selectively insertable central shaft provides a further means to slow the metering rate. This works by at least partially occluding the volume defined by the axially extending central aperture and thereby tending to convey in larger proportion or solely the material exposed to the flights of the Auger blade.

Differently sized static centre shafts may be provided to occlude the axially extending central aperture of the Auger or like conveyor entirely and/or partially to different degrees. Similarly, to vary the effect, shafts may be adapted to be insertable within the centre to a greater or lesser extent.

The screw conveyor is thus used as the principal control element in a metering system to meter particulate material more consistently in all conditions into a pneumatic transport system. It is not used as a transport system per se. The pneumatic transport system may otherwise be conventional, and suitable systems will be familiar to the skilled person.

As has been observed above, the use and for example interchange and/ or selective insertion of a static central shaft may be applied to vary/ control the rate of metering of particulate material. Additionally or alternatively, and in familiar manner, the rate of metering of particulate material may be varied by varying the speed of rotation of the screw conveyor.

The screw conveyor is for example rotationally driven by a suitable drive mechanism such as a rotary electric motor. The drive mechanism may be adapted to drive the shaft rotationally at variable speeds.

The drive mechanism may be provided in conjunction with a gearing mechanism providing for a discretely or continuously variable transmission to effect and/or facilitate variation in the rotational drive speed of the screw conveyor. A gearing mechanism can for example comprise plural interchangeably engageable spur gears in familiar manner.

Metering rate may also be controlled by control of flow of particulate material through the inlet into the metering channel. For example, a selectively openable or adjustable inlet mechanism, for example including an adjustable closure or partial closure, may be provided. Such a selectively openable or adjustable inlet mechanism may thereby for example selectively expose more or fewer flights of the screw conveyor.

A screw conveyor may be provided having a uniform/ constant flight pitch or a non-uniform/ variable flight pitch.

In a particular refinement in a possible embodiment, a screw conveyor is provided having a non-uniform pitch, and a selective inlet delivery mechanism is also provided which enables particulate material to be selectively delivered in use from a storage source to one of a plurality of different portions of the screw conveyor having different pitch.

In use, the selective inlet delivery mechanism is in communication with a storage source such as a hopper to receive particulate material from the storage source and deliver the same to an inlet of the metering channel, and includes a selective distribution mechanism to selectively deliver the same to different parts of the screw conveyor having such different pitches.

For example, in a preferred case, an adjustable delivery slide is provided to effect such selective distribution in use, for example under control of suitable user control means.

The adjustable delivery slide may for example comprise a slide adapted selectively to expose or cover selective areas of the metering channel in which the screw conveyor has different flight pitches.

This aspect of the invention relies on the ability to utilise different pitches. For a given rotational speed of the screw conveyor, metering rate is dependent on the pitch of the screw conveyor because it dictates the amount of material conveyed in a single revolution.

Thus, considering for example an embodiment in which a variable pitch screw conveyor has a first portion with a relatively large pitch and a second portion with a relatively small pitch, a delivery mechanism may be provided to selectively convey particulate material to the portion of the screw conveyor having a relatively large pitch or to the portion of the screw conveyor having a relatively small pitch. For example, an adjustable slide may be provided to selectively cover one portion and expose the other.

Thus, in a first configuration, where only the smaller pitch portion of the screw conveyor is exposed, only the volume of material that can be conveyed by the small pitch will be metered. Conversely, in a second configuration when the portion with the larger pitch is exposed, a larger quantity of particulate material comprising the volume between the larger pitched flights can be conveyed.

The above example of larger and smaller pitched portions is merely a single example of how the variable pitch concept could be implemented. A screw conveyor in accordance with this embodiment of the invention may be provided with a variable pitch in that it defines two discrete regions of different constant pitch, or more than two discrete regions of different constant pitch, or regions of progressively variable pitch such as continuously progressively variable pitch, or any combinations of the same.

In accordance with this more complete aspect, a storage source comprises a suitable contained volume defining an outlet, and is for example a storage hopper such as a grain hopper. The outlet of the storage source is in distributive communication with an inlet of a metering channel of a metering system in accordance with the first aspect of the invention, for example by means of a distribution mechanism in accordance with the preferred embodiment thereof. Other features of this aspect of the invention will be understood by analogy.

Thus, in accordance with this aspect of the invention, a more complete metering system includes a storage source for particulate material, and in particular for particulate material for agricultural application. In use, particulate material is supplied from the storage source via an outlet in a storage volume to an inlet of a metering channel as above described, and is conveyed via a screw conveyor metering system as above described to an outlet of the metering channel for onward supply in controlled and metered manner to a pneumatic transport system, for example being part of a transport and distribution system in an agricultural distribution machine such as an agricultural seed drill.

In accordance with a yet more complete aspect of the invention, a metering system in accordance with the first or second aspect of the invention is further provided in conjunction with a pneumatic transport system, which pneumatic transport system is in distributive communication with and receives metered particulate material from the outlet of the metering channel and conveys the metered particulate material onwards in use to a distribution system such as a distribution system composed as part of an agricultural distribution machine such as a seed drilling apparatus.

In accordance with a yet further aspect of the embodiment, an agricultural distribution machine such as a seed drilling apparatus is provided which incorporates a system in accordance with any of the above aspects of the invention.

An agricultural distribution machine for example comprises a delivery system mounted on a supporting chassis having a plurality of outputs to deliver particulate material to a surface such as a growing surface; a central storage source such as a hopper; and a distribution system to transport the particulate material from the central storage source to the outputs including a pneumatic transport system and including a metering system as above described to deliver particulate material in metered manner from the storage source to the pneumatic transport system.

The material delivery system is for example an elongate and typically laterally extending plural array of material delivery units for example distributed along a supporting beam extending transversely of an intended direction of forward motion of the distribution machine so as in use to contact or be positioned adjacent to the growing surface and provided with delivery outlets to output the particulate material in controlled manner to a growing surface. The delivery machine further comprises a central storage hopper and a distribution system to transport the particulate material from the hopper to the outputs.

The agricultural distribution machine is for example a particulate material distribution machine such as a seed drill.

In this case the delivery system may comprise a laterally extending plural array of seed delivery units for example distributed along a supporting beam, for example comprising a laterally extending array of drill coulters. A delivery system may include various other apparatus to facilitate the seed distribution and planting process, for example including furrow devices such as discs to open a planting furrow, and other means to close and tamper the furrow after the seed is planted. The delivery system is typically ground engaging and mounted on a suitable chassis frame which is for example towed behind a tractor along a field in use.

The invention will now be described by way of example only with reference to Figures 1 to 6 of the accompanying drawings in which:
Figure 1 shows a metering system in accordance with an embodiment of the invention in exploded view;
Figure 2 shows a metering system in accordance with a modified variant of the embodiment of figure 1 in exploded view;
Figure 3 shows how the metering system of figure 1 or figure 2 might be assembled in assembled isometric view;
Figure 4 shows a further alternative arrangement to that of figures 1 and 2;
Figure 5 illustrates the selective use of different auger centres in the figure 4 embodiment;
Figure 6 illustrates the aperture orientation in the figure 4 embodiment.

In accordance with the illustrated embodiments, a metering system is provided that creates a mechanism to allow seed or other particulate material to be metered more consistently in all conditions with a single metering mechanism.

This is achieved by using a centreless auger to meter material rather than a range of interchangeable fluted rollers. The rate of metering may be controlled by variation of rotation of the centreless auger and can additionally be further fine-tuned by using an adjustable shut off slide and plural interchangeable static insert shafts.

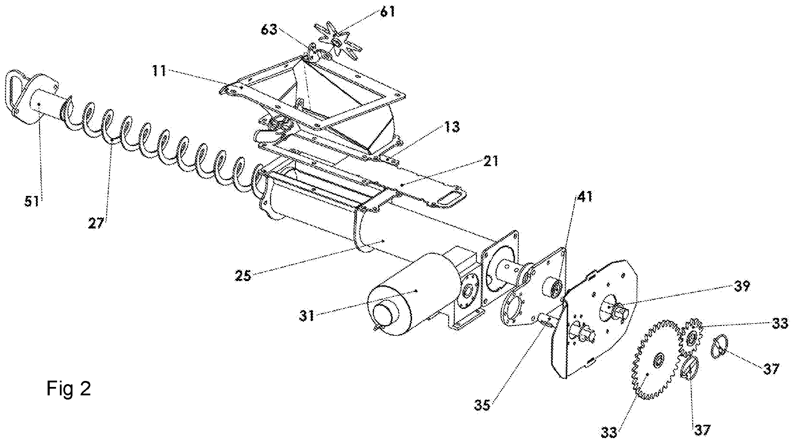

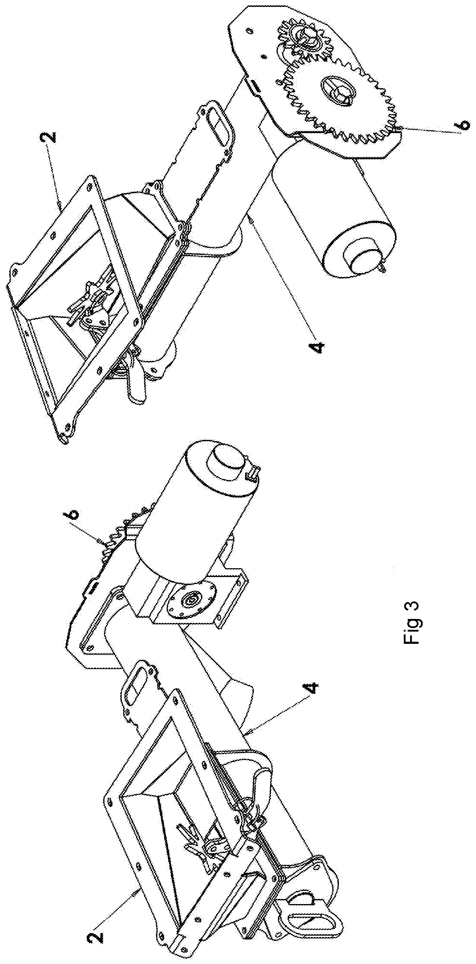

The system illustrated in figure 3, in assembled isometric view generally illustrative of all example embodiments of the invention described in the drawings but particularly showing the embodiment of figure 2, comprises generally a hopper adapter assembly 2, an auger and housing assembly 4 and a drive assembly 6. These assemblies are illustrated in greater detail in the exploded views of the various embodiments.

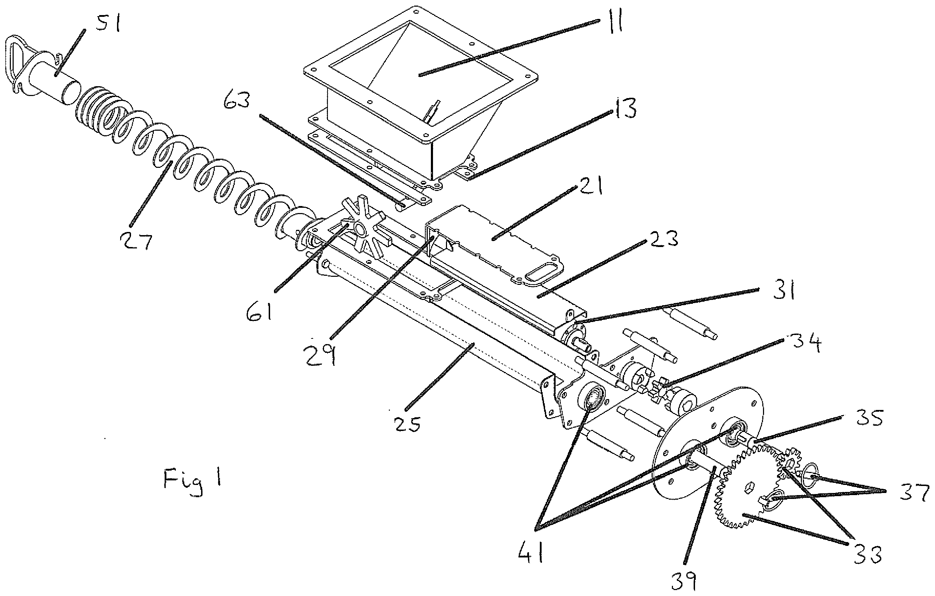

Referring first to figure 1, the hopper adaptor assembly comprises a hopper adaptor 11 with an apertured base to seat in use above a complementary aperture in the auger housing 25 and provide a route for the passage of particulate material such as seed from the hopper to the auger channel. Slide recesses 13 at the base of the hopper adaptor receive an adjustable slide 21 that selectively closes the access hatch 23 to the aperture in the auger housing in use.

The auger housing 25 defines a u-shaped auger channel into which the flighted auger 27 is received. The auger 27 is a centreless auger, which is to say that there is no central axis serving as a drive shaft, the progressive helical flighting instead surroundingly defining an open and axially extending central apertured portion. In the embodiment illustrated in figure 1 the auger 27 is a variable pitch auger. A rubber flap 29 provided in association with the adjustable slide sits in the u-shaped channel when assembled.

The auger 27 is powered and rotationally driven via a motor through a pair of spur gears 33. The spur gears 33 can be interchanged to give a wide range of metering rates of particulate material i.e. for slow rates the motor can be geared 3:1 or 1:3 for high rates. Detail of the drive assembly 6 is shown in exploded view in figure 1. The motor 31 is coupled mechanically via the motor coupling 34 to drive an input shaft 35. The input shaft rotationally drives a first of the pair of spur gears 33 which are held in place on their respective shafts by the lynch pins 37. The second of the spur gears 33 causes the rotation of the output shaft 39 which is coupled to rotate the auger in-situ in the u-shaped auger channel. The assembly is mounted on suitable bearings/ bushes 41 and contained within a drive housing. The components 41 may for example comprise ball bearings, nylon bushes etc.

The embodiment relies on the ability to utilise different pitches as one of the mechanisms by which flow rate can be varied. The centreless auger 27 in the example embodiment illustrated in figure 1 has variable pitch. The adjustable slide is a feature that is designed to expose or cover different Auger pitches. Seed rate in such an example embodiment is dependent both on speed of rotation and on the pitch of the auger because it dictates the amount of material conveyed in a single revolution. In the illustration you can see the slide covers the large pitch of the auger and only exposes the small pitch thereby only conveying the volume of material that can be conveyed by the small pitch. Conversely, when the large pitch is revealed by the slide it can convey more material; this is because the volume between the flights is larger.

Often there is a need to further slow the seeding rate. In the embodiment a static central shaft 51 can be inserted to reduce (in the illustrated figure 1 embodiment to almost half) the combined seeding rate achieved by the gearing and the inlet pitch. This works by filling the volume in the auger centre and thereby only conveying the material exposed to the flights of the auger. The central shaft also provides a number of other functions. Firstly, it ensures consistent positive metering of small particulate material so that it cannot flow back down the centre of the auger. Secondly, the shaft is designed to be static to provide a self cleaning mechanism so that if the material contained any moisture, the metering system will perform consistently and reliably.

The static central shaft can be contrasted functionally with the drive shaft of a conventional centred auger. It does not rotate in a coupled manner with or act to drive the flights. The flights are driven directly by the drive assembly 6. The static central shaft of the invention does not rotate but merely seats within the auger centre in a fixed coaxial relationship, for example held there by being bolted to the housing. Indeed, in the preferred case, the static central shaft does not necessarily even fit snugly within the central aperture of the centreless auger, but is configured to give a degree of clearance and loose fit. For example, in the illustrated embodiments, a static central shaft might have a diameter of 30 mm relative to an internal auger central channel diameter of 40 mm. Similarly, in the preferred embodiments, the auger may be sized so as to be received in the u-shaped channel in such manner that some clearance is provided between the outer perimeter of the auger as defined by the helical flights and the surrounding wall of the channel as defined by the housing 25 and other closures. In the illustrated embodiment, the various components of the channel housing define a cylindrical channel of diameter 60 mm, and auger is provided with external diameter of 50 mm and internal diameter of 40 mm, and a central shaft comprising a rod of diameter 30 mm is provided to give the necessary clearances. These measurements are of course examples only of the general principle.
A suitable outlet aperture is designed with the purpose of ensuring uniform metering at all rates; the shape is critical to the design. As the auger turns it appears to travel past the auger outlet at a consistent rate. As the flights pass over the outlet the material pours out. The shape of the aperture allows the last of the material in the first pitch to be metered with the start of the second pitch ensuring uniform metering with no dead areas. An elongate slot may be preferred.

An agitator gear 61 is provided. The agitator gear is designed to stop the bridging effect of seed as it tessellates through the aperture of the inlet. The agitator is designed to work as a worm gear via the movement of the auger. This means as the auger flight comes into contact with tooth of the gear it turns the agitator about it pivot thereby creating via the agitator shaft 63 an agitating effect of the surrounding seed to prevent the bridging effect, this ensures a uniform metering. The agitator can also be engaged and disengaged via two positions depending on operator's requirement.

An alternative exploded view of an alternative assembly is illustrated in figure 2. The view is intended to illustrate certain alternative aspects of a possible arrangement to those presented in figure 1. Otherwise, like components are given like numerals.

In particular, the arrangement of figure 2 uses a fixed pitch auger 27. The delivery rate of seed or other particulate in such an example embodiment is therefore no longer dependent on the exploitation of a variable pitch, but is dictated by the rotation of the auger and by appropriate selection of central shafts. For many intended applications, such an arrangement is mechanically simpler, and might be preferred.

An adjustable slide might still be used to selectively expose different sizes of inlet aperture in order to vary the supply rate to the auger.

In accordance with the illustrated embodiments in figure 2, a longer removable central shaft is shown. The purpose of this figure is to illustrate that differently sized central shafts may be used. In particular, central shafts may have different lengths in order to project to a greater or lesser extent into the axial central aperture of the screw conveyor and/or may have different diameters to give a different extent of clearance. Both of these design features may be used to selectively vary the volume in the auger centre that has been occluded and in consequence to provide a further mechanism to vary the overall particulate delivery rate.

Further optional modifications are illustrated in figure 2. The motor coupling 34 is not used in the figure 2 embodiment. The cover 23 is not present. Instead the auger housing 25 comprises a closed housing (except for the complementary aperture to allow passage of particulate from the hopper when the slide is open), and is in the illustrated embodiment a closed cylindrical housing. A plain slide 21 is used to close the aperture, without the rubber flap 29 of figure 1.

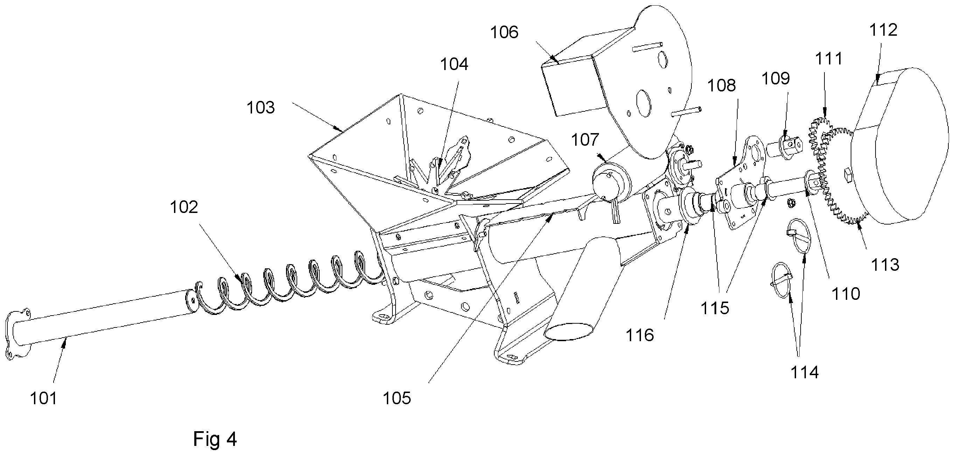

Figure 4 shows a further alternative arrangement to that of figures 1 and 2, again in exploded view, but to be assembled as generally illustrated by figure 3.
The arrangement is again shown with a hopper adaptor base unit 103 with an apertured base to seat in use above a complementary aperture in the auger housing and provide a route for the passage of particulate material such as seed from the hopper to the channel defined by the auger housing. As in the figure 3 embodiment the auger housing comprises a closed cylindrical housing save for the apertured portion. A shut off slide 105 selectively opens and closes the aperture in the cylindrical housing. An agitation wheel 104 facilitates passage of particulate from the hopper to the auger housing when the aperture is open.

The auger housing defines cylindrical channel into which the flighted auger 102 is received. In accordance with the principles of the invention the auger 102 is a centreless auger, which is to say that there is no central axis serving as a drive shaft, the progressive helical flighting instead surroundingly defining an open and axially extending central apertured portion. In the embodiment illustrated in figure 4 the auger 102 has fixed pitch flighting.

The auger 102 is powered and rotationally driven via a motor assembly comprising a motor 107 mounted via the cover/ back plate 106 and mount/ bush housing 108. A drive assembly includes a drive stub shaft 109, driven stub shaft 110, small and large gears 111, 113 in a gear cover 112, lynch pins 114, plastic bushes 115 and an auger flighting drive boss 116.

A static central shaft 101 is provided and in the assembled form is bolted in fixed position relative to the housing. Again, in the preferred case, the static central shaft does not fit snugly within the central aperture of the centreless auger, but is configured to give a degree of clearance and loose fit. Similarly, in the preferred embodiment, the auger may be sized so as to be received in the cylindrical channel in such manner that some clearance is provided between the outer perimeter of the auger as defined by the helical flights and the surrounding wall of the channel as defined by the cylindrical housing. Optimum dimensions and clearances depend on application/ conditions. Similar dimensions to those discussed in the context of other embodiments may be suitable.

The static central shaft acts to limit the combined seeding rate by filling the volume in the auger centre and thereby only conveying the material exposed to the flights of the auger. As before the central shaft also provides a number of other functions including facilitation of consistent positive metering of small particulate material and an inherent self cleaning mechanism.
Although the respective views in figures 1, 3 and 4 each illustrate a respective different central shaft, it will be understood that this illustrates the possibility of using multiple interchangeable shafts. A suitable shaft is assembled in position in the auger centre, for example in a fixed relationship axially along the auger centre, and for example by being bolted into a fixed position to the housing.

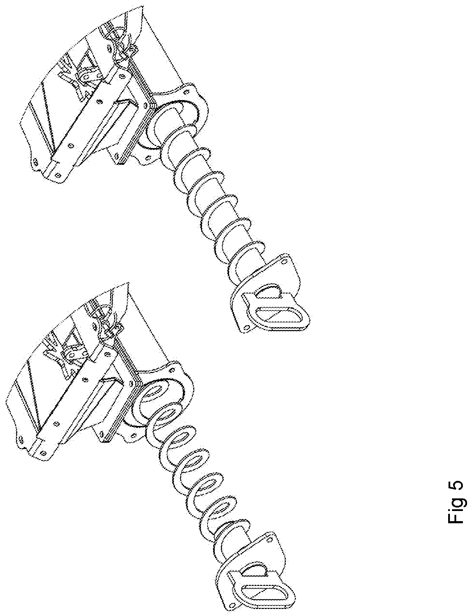

Figure 5 illustrates the use of two interchangeable central shafts, a relatively shorter first shaft that occludes the aperture defined by the centreless flighting to relatively lesser first extent and a relatively longer second shaft that occludes the aperture defined by the centreless flighting to relatively greater second extent. Multiple such shafts of different lengths and/ or different cross-sectional extents may be provided for selective insertion as a means to vary the combined seeding rate to a greater or lesser extent.

A suitable outlet aperture in the cylindrical housing is defined with the purpose of ensuring uniform metering at all rates; the shape is critical to the design. The shape of the outlet aperture is designed to facilitate uniform metering at a consistent rate with no dead areas. An elongate slot may be preferred. The orientation of the outlet aperture may also be a design factor in ensuring uniform metering at all rates. In a simple design, an aperture such as an elongate slot may be provided oriented in a direction perpendicular to an axial direction of the auger. However, it is generally found for many applications that a better metering action is achieved where an aperture in the metering channel, for example provided as an elongate slot, is oriented at an angle to the axial direction of the screw conveyor, and in the opposite sense to the angle defined by the progressive flights of the screw conveyor, and in the case of a helical screw to the helix angle. In a particular preferred case, the aperture is oriented at an angle to an axial direction which is the same as the angle made by the flights to an axial direction but in the opposite sense. This arrangement is found to minimise any pulsing effect.

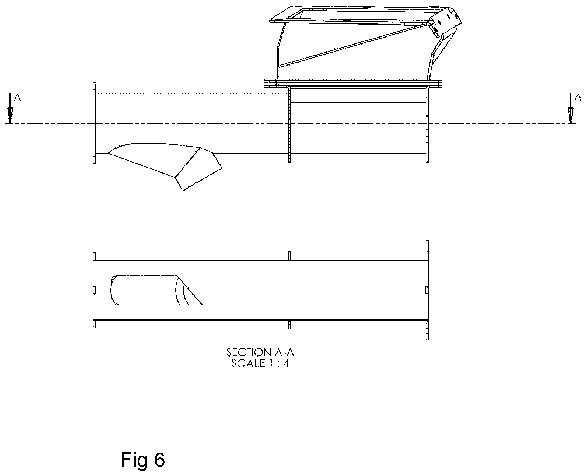

An example of such an outlet aperture is illustrated in figure 6.

The embodiments considered together illustrate a number of mechanisms by means of which the combined meter rate can be varied, including without limitation: fixed or variable pitch screw conveyors, differently sized central shafts (in terms of length and/or diameter), a selectively variable inlet aperture, and gearing arrangements to vary speed of rotation. It will be understood by the skilled person that each of these is functionally separate and that they may be used in any suitable combination to optimise control of metering rate for given particulate materials and/or operating conditions.

In the illustrated embodiments, a novel metering system in accordance with an embodiment of the first aspect of the invention is shown. As will be appreciated from the above description, the aim of the invention is to provide an alternative metering mechanism to allow particulate material to be metered more consistently in all conditions than is presently achievable by the use of interchangeable fluted rollers. It is the intention that the metering system of the invention would be suitable for incorporation in a range of distribution machines, and in particular agricultural distribution machines such as pneumatic seed drills, which require such careful and controlled metering of particulate materials in a range of conditions. The skilled person would readily appreciate the advantages offered by the present embodiment of metering system, and would readily appreciate how to use it in substitution for other metering systems across such a range of apparatus and applications.

## Claims

1. A metering system to meter particulate material at varying rates from a storage source such as a hopper to a transport and distribution system including a pneumatic transport system, the metering system comprising a metering channel defining an inlet to receive particulate material from a storage source in use and an outlet to pass particulate material in use to a pneumatic transport system and having a centreless screw conveyor (27; 102) received within the metering channel to convey particulate material from the inlet to the outlet in a controlled manner;
**characterised in that** the centreless screw conveyor (27; 102) is additionally provided with a static central shaft (51; 101) extending in situ at least partly along the length of an axially extending central aperture defined by the screw conveyor (27; 102).

2. A metering system in accordance with claim 1 wherein the screw conveyor (27; 102) comprises a progressive screw flighting received within the metering channel such as, as it rotates, to tend to urge particulate material in a metering direction along the metering channel from an inlet to an outlet

3. A metering system in accordance with claim 1 or claim 2 wherein the screw conveyor (27; 102) comprises a progressive screw flighting that progresses surroundingly about a nominal but open central axis to define an axially extending central aperture.

4. A metering system in accordance with one of claims 1 to 3 wherein the screw conveyor (27; 102) is a centreless Auger conveyor.

5. A metering system in accordance with any preceding claim wherein the centreless screw conveyor (27; 102) is provided with a static central shaft (101) extending in situ for a major part along the length of an axially extending central aperture defined by the screw conveyor.

6. A metering system in accordance with any preceding claim wherein the centreless screw conveyor (27; 102) is provided with a plurality of interchangeable static central shafts (51; 101) each extending for a different extent along the length of an axially extending central aperture defined by the screw conveyor.

7. A metering system in accordance with any preceding claim wherein the static central shaft (51; 101) is configured such that some clearance is provided between the static central shaft and the central aperture, wherein the central aperture has a first cross-sectional extent and the static central shaft has a complementary cross-sectional shape of substantially lesser cross-sectional extent.

8. A metering system in accordance with claim 7 wherein the centreless screw conveyor (27; 102) is provided with a plurality of interchangeable static central shafts (51; 101) of differing cross-sectional extent providing different clearances when in situ within the central aperture.

9. A metering system in accordance with any preceding claim wherein the static central shaft (51; 101) is fixedly mountable within the metering system in rigid mechanical engagement with a housing defining the metering channel so as to be in fixed spatial relationship relative to the centreless screw conveyor.

10. A metering system in accordance with any preceding claim wherein the screw conveyor (27; 102) is adapted such that the rate of metering of particulate material may be varied by varying the speed of rotation of the screw conveyor and is powered via a drive shaft (35, 39; 109, 110) rotationally driven by a rotary drive mechanism adapted to drive the shaft rotationally at variable speeds.

11. A metering system in accordance with claim 10 wherein the drive mechanism is provided in conjunction with a gearing mechanism (33; 111, 113) providing for a variable transmission to effect and/or facilitate variation in the rotational drive speed wherein the gearing mechanism comprises plural interchangeably engageable spur gears.

12. A metering system in accordance with any preceding claim wherein a screw conveyor is provided having a non-uniform pitch (27), and a selective inlet delivery mechanism (13, 21, 23) is provided which enables particulate material to be selectively delivered in use from a storage source to one of a plurality of different portions of the screw conveyor having different pitch.

13. A metering system in accordance with claim 12 wherein an adjustable delivery slide (21) is provided to effect such selective delivery in use in that it is adapted selectively to expose or cover selective areas of the metering channel in which the screw conveyor (27) has respectively different pitches.

14. A metering system in accordance with one of claims 12 or 13 wherein a variable pitch screw conveyor (27) has at least a first portion with a relatively large pitch and a second portion with a relatively small pitch, and a delivery mechanism is provided to selectively convey particulate material to the portion of the screw conveyor having a relatively large pitch or to the portion of the screw conveyor having a relatively small pitch wherein an adjustable slide (21) is provided to selectively cover one portion and expose the other.

15. A metering system in accordance with any preceding claim provided in conjunction with a pneumatic transport system, which pneumatic transport system is in distributive communication with and receives metered particulate material from the outlet of the metering channel and conveys the metered particulate material onwards in use to a distribution system.

## Patentansprüche

1. Ein Dosiersystem zum Dosieren von partikelförmigem Material mit veränderlichen Geschwindigkeiten von einer Lagerungsquelle, wie etwa einem Trichter, zu einem ein Drucklufttransportsystem umfassenden Transport- und Verteilsystem, wobei das Dosiersystem eine Dosierrinne beinhaltet, die einen Einlass, um bei Gebrauch partikelförmiges Material von einer Lagerungsquelle aufzunehmen, und einen Auslass, um bei Gebrauch partikelförmiges Material an ein Drucklufttransportsystem zu liefern, definiert, und eine hohle Förderschnecke (27; 102) aufweist, die in der Dosierrinne aufgenommen ist, um partikelförmiges Material auf kontrollierte Weise von dem Einlass zu dem Auslass zu fördern;
**dadurch gekennzeichnet, dass** die hohle Förderschnecke (27; 102) zusätzlich mit einer statischen mittleren Welle (51; 101) versehen ist, die sich in situ mindestens teilweise entlang der Länge einer von der Förderschnecke (27; 102) definierten, sich axial erstreckenden mittleren Öffnung erstreckt.

2. Dosiersystem gemäß Anspruch 1, wobei die Förderschnecke (27; 102) progressive Schneckenflügel beinhaltet, die in der Dosierrinne aufgenommen sind, sodass sie, wenn sie sich drehen, dazu neigen, partikelförmiges Material in einer Dosierrichtung entlang der Dosierrinne von einem Einlass zu einem Auslass zu drängen.

3. Dosiersystem gemäß Anspruch 1 oder Anspruch 2, wobei die Förderschnecke (27; 102) progressive Schneckenflügel beinhaltet, die um eine nominelle aber offene mittlere Achse herum voranschreiten, um eine sich axial erstreckende mittlere Öffnung zu definieren.

4. Dosiersystem gemäß einem der Ansprüche 1 bis 3, wobei es sich bei der Förderschnecke (27; 102) um einen hohlen Schneckenförderer handelt.

5. Dosiersystem gemäß einem der vorhergehenden Ansprüche, wobei die hohle Förderschnecke (27; 102) mit einer statischen mittleren Welle (101) versehen ist, die sich in situ größtenteils entlang der Länge einer von der Förderschnecke definierten, sich axial erstreckenden mittleren Öffnung erstreckt.

6. Dosiersystem gemäß einem der vorhergehenden Ansprüche, wobei die hohle Förderschnecke (27; 102) mit einer Vielzahl von untereinander austauschbaren statischen mittleren Wellen (51; 101) versehen ist, die sich jeweils in einem anderen Ausmaß entlang der Länge einer von der Förderschnecke definierten, sich axial erstreckenden mittleren Öffnung erstrecken.

7. Dosiersystem gemäß einem der vorhergehenden Ansprüche, wobei die statische mittlere Welle (51; 101) derart konfiguriert ist, dass zwischen der statischen mittleren Welle und der mittleren Öffnung etwas Spielraum bereitgestellt ist, wobei die mittlere Öffnung ein erstes Querschnittsmaß aufweist und die statische mittlere Welle eine komplementäre Querschnittsform mit wesentlich geringerem Querschnittsmaß aufweist.

8. Dosiersystem gemäß Anspruch 7, wobei die hohle Förderschnecke (27; 102) mit einer Vielzahl von untereinander austauschbaren statischen mittleren Wellen (51; 101) mit unterschiedlichem Querschnittsmaß versehen ist, die unterschiedliche Spielräume bereitstellen, wenn sie sich in situ in der mittleren Öffnung befinden.

9. Dosiersystem gemäß einem der vorhergehenden Ansprüche, wobei die statische mittlere Welle (51; 101) in starrem mechanischen Eingriff mit einem die Dosierrinne definierenden Gehäuse fest in dem Dosiersystem eingebaut werden kann, um sich in einer festen räumlichen Beziehung relativ zu der hohlen Förderschnecke zu befinden.

10. Dosiersystem gemäß einem der vorhergehenden Ansprüche, wobei die Förderschnecke (27; 102) derart angepasst ist, dass die Geschwindigkeit der Dosierung von partikelförmigem Material durch Verändern der Drehgeschwindigkeit der Förderschnecke verändert werden kann und über eine Antriebswelle (35, 39; 109, 110) mit Energie versorgt wird, die von einem zum drehenden Antreiben der Welle mit veränderlichen Geschwindigkeiten angepassten Drehantriebsmechanismus drehend angetrieben wird.

11. Dosiersystem gemäß Anspruch 10, wobei der Antriebsmechanismus gemeinsam mit einem Getriebemechanismus (33; 111, 113) bereitgestellt ist, der für eine veränderliche Übersetzung sorgt, um eine Veränderung der Drehantriebsgeschwindigkeit zu bewirken und/oder zu erleichtern, wobei der Getriebemechanismus mehrere untereinander austauschbar verzahnbare Stirnräder beinhaltet.

12. Dosiersystem gemäß einem der vorhergehenden Ansprüche, wobei eine Förderschnecke bereitgestellt wird ist, die eine nicht einheitliche Steigung (27) aufweist, und ein selektiver Einlasszufuhrmechanismus (13, 21, 23) bereitgestellt ist, der zulässt, dass bei Gebrauch partikelförmiges Material selektiv von einer Lagerungsquelle zu einem von einer Vielzahl von verschiedenen Abschnitten der Förderschnecke mit unterschiedlicher Steigung zugeführt wird.

13. Dosiersystem gemäß Anspruch 12, wobei ein verstellbarer Zufuhrschieber (21) bereitgestellt ist, um bei Gebrauch eine derartige selektive Zufuhr bereitzustellen, indem er selektiv angepasst wird, um selektive Bereiche der Dosierrinne, in denen die Förderschnecke (27) jeweils unterschiedliche Steigungen aufweist, freizulegen oder abzudecken.

14. Dosiersystem gemäß einem der Ansprüche 12 oder 13, wobei eine Förderschnecke (27) mit veränderlicher Steigung mindestens einen ersten Abschnitt mit relativ großer Steigung und einen zweiten Abschnitt mit relativ kleiner Steigung aufweist und ein Zufuhrmechanismus bereitgestellt ist, um partikelförmiges Material selektiv zu dem Abschnitt der Förderschnecke mit relativ großer Steigung oder zu dem Abschnitt der Förderschnecke mit relativ kleiner Steigung zu fördern, wobei ein verstellbarer Schieber (21) bereitgestellt ist, um selektiv einen Abschnitt abzudecken und den anderen freizulegen.

15. Dosiersystem gemäß einem der vorhergehenden Ansprüche, das gemeinsam mit einem Drucklufttransportsystem bereitgestellt ist, wobei sich das Drucklufttransportsystem in verteilender Verbindung mit dem Auslass der Dosierrinne befindet und dosiertes partikelförmiges Material davon aufnimmt und das dosierte partikelförmige Material bei Gebrauch weiter zu einem Verteilsystem fördert.

## Revendications

1. Un système de dosage pour doser de la matière particulaire à des taux qui varient à partir d'une source de stockage telle qu'une trémie jusqu'à un système de transport et de distribution incluant un système de transport pneumatique, le système de dosage comprenant un canal de dosage définissant une entrée afin de recevoir de la matière particulaire en provenance d'une source de stockage lors de l'utilisation et une sortie afin de faire passer de la matière particulaire lors de l'utilisation jusqu'à un système de transport pneumatique et ayant un convoyeur à vis sans âme (27 ; 102) reçu au sein du canal de dosage afin de convoyer de la matière particulaire de l'entrée jusqu'à la sortie de façon contrôlée ;
**caractérisé en ce que** le convoyeur à vis sans âme (27 ; 102) est de plus fourni avec un arbre central statique (51 ; 101) s'étendant in situ au moins partiellement sur la longueur d'une ouverture centrale s'étendant de manière axiale définie par le convoyeur à vis (27 ; 102).

2. Un système de dosage selon la revendication 1 dans lequel le convoyeur à vis (27 ; 102) comprend un filetage de vis progressif reçu au sein du canal de dosage tel, lorsqu'il est en rotation, qu'il tende à pousser de la matière particulaire dans une direction de dosage le long du canal de dosage à partir d'une entrée jusqu'à une sortie.

3. Un système de dosage selon la revendication 1 ou la revendication 2 dans lequel le convoyeur à vis (27 ; 102) comprend un filetage de vis progressif qui progresse de façon encerclante autour d'un axe central nominal mais ouvert afin de définir une ouverture centrale s'étendant axialement.

4. Un système de dosage selon une des revendications 1 à 3 dans lequel le convoyeur à vis (27 ; 102) est un convoyeur à vis sans fin sans âme.

5. Un système de dosage selon n'importe quelle revendication précédente dans lequel le convoyeur à vis sans âme (27 ; 102) est fourni avec un arbre central statique (101) s'étendant in situ en majeure partie sur la longueur d'une ouverture centrale s'étendant axialement définie par le convoyeur à vis.

6. Un système de dosage selon n'importe quelle revendication précédente dans lequel le convoyeur à vis sans âme (27 ; 102) est fourni avec une pluralité d'arbres centraux statiques interchangeables (51 ; 101) s'étendant chacun sur une étendue différente sur la longueur d'une ouverture centrale s'étendant axialement définie par le convoyeur à vis.

7. Un système de dosage selon n'importe quelle revendication précédente dans lequel l'arbre central statique (51 ; 101) est configuré de telle sorte qu'un jeu soit fourni entre l'arbre central statique et l'ouverture centrale, l'ouverture centrale ayant une première étendue à section transversale et l'arbre central statique ayant une forme section transversale complémentaire d'une étendue à section transversale substantiellement inférieure.

8. Un système de dosage selon la revendication 7 dans lequel le convoyeur à vis sans âme (27 ; 102) est fourni avec une pluralité d'arbres centraux statiques interchangeables (51 ; 101) dont l'étendue à section transversale différente fournissant des jeux différents lorsqu'in situ au sein de l'ouverture centrale.

9. Un système de dosage selon n'importe quelle revendication précédente dans lequel l'arbre central statique (51 ; 101) peut être monté de manière fixe au sein du système de dosage en prise mécanique rigide avec un logement définissant le canal de dosage de sorte à être en relation spatiale fixe par rapport au convoyeur à vis sans âme.

10. Un système de dosage selon n'importe quelle revendication précédente dans lequel le convoyeur à vis (27 ; 102) est adapté de telle sorte que le taux de dosage de la matière particulaire puisse être varié en faisant varier la vitesse de rotation du convoyeur à vis et est mû par l'intermédiaire d'un arbre d'entraînement (35, 39 ; 109, 110) entraîné en rotation par un mécanisme d'entraînement rotatif conçu pour entraîner l'arbre en rotation à des vitesses variables.

11. Un système de dosage selon la revendication 10 dans lequel le mécanisme d'entraînement est fourni conjointement avec un mécanisme d'engrenage (33 ; 111, 113) permettant une transmission variable afin de réaliser et/ou de faciliter une variation dans la vitesse d'entraînement en rotation, le mécanisme d'engrenage comprenant plusieurs engrenages cylindriques pouvant être mis en prise de manière interchangeable.

12. Un système de dosage selon n'importe quelle revendication précédente dans lequel un convoyeur à vis est fourni ayant un pas non uniforme (27), et un mécanisme de livraison d'entrée sélectif (13, 21, 23) est fourni qui permet à de la matière particulaire d'être livrée de manière sélective lors de l'utilisation à partir d'une source de stockage jusqu'à une portion d'une pluralité de différentes portions du convoyeur à vis ayant un pas différents.

13. Un système de dosage selon la revendication 12 dans lequel une glissière de livraison ajustable (21) est fournie afin de réaliser une telle livraison sélective lors de l'utilisation en ce qu'elle est adaptée sélectivement pour révéler ou couvrir des zones sélectives du canal de dosage où le convoyeur à vis (27) a respectivement des pas différents.

14. Un système de dosage selon l'une des revendications 12 ou 13 dans lequel un convoyeur à vis à pas variable (27) a au moins une première portion avec un pas relativement grand et une deuxième portion avec un pas relativement petit et un mécanisme de livraison est fourni afin de convoyer sélectivement de la matière particulaire jusqu'à la portion du convoyeur à vis ayant un pas relativement grand ou jusqu'à la portion du convoyeur à vis ayant un pas relativement petit dans lequel une glissière ajustable (21) est fournie afin de couvrir sélectivement une portion et de révéler l'autre.

15. Un système de dosage selon n'importe quelle revendication précédente fourni conjointement avec un système de transport pneumatique, lequel système de transport pneumatique est en communication distributive avec et reçoit de la matière particulaire dosée de la sortie du canal de dosage et convoie la matière particulaire dosée en avant lors de l'utilisation jusqu'à un système de livraison.
